# FASCICULE DE BREVET EUROPEEN

(11) **EP 1 443 815 B1**
(45) Date de publication et mention de la délivrance du brevet: **18.10.2006**
(21) Numéro de dépôt: 02803045.0
(22) Date de dépôt: 28.10.2002
(51) Int. Cl.: A01G 3/04

(54) **BARRE DE COUPE**
SCHNEIDMESSER
CUTTER BLADE

(30) Priorité: 12.11.2001 FR 0114580
(43) Date de publication de la demande: 11.08.2004
(73) Titulaire: Andelfinger, Georges, 68127 Niederhergheim (FR)
(72) Inventeur: Andelfinger, Georges, 68127 Niederhergheim (FR)
(74) Mandataire: Laget, Jean-Loup
(86) Numéro de dépôt international: PCT/FR2002/003702
(87) Numéro de publication internationale: WO 2003/041488

(56) Documents cités:
- DE-A- 4 418 762
- DE-U- 8 020 425
- DE-U- 8 300 489
- FR-A- 2 423 142
- FR-A- 2 594 630
- FR-A- 2 718 326
- FR-A- 2 787 966
- US-A- 4 302 922

## Description

La présente invention porte sur une barre de coupe équipant une machine utilisable notamment en agricultùre, arboriculture et viticulture, reliée à un support solidaire d'un cadre et pourvue d'au moins un module comprenant au moins un palier solidaire dudit cadre, ce palier portant un arbre auquel est fixé au moins un organe de coupe pouvant être entraîné en rotation, le module pouvant en outre comporter au moins une poulie et être relié à un moteur.

Parmi ces machines de coupe, celle couramment dénommée "rogneuse" est mise en oeuvre pour la taille de la végétation des plants de vigne à différentes périodes de l'année.

Les barres de coupe en général et plus particulièrement les modules qui y sont montés, offerts sur le marché depuis de nombreuses années, sont de types variés, mais révèlent tous un inconvénient dont la cause réside dans leur conception et construction et qui se manifeste concrètement à différents stades. En effet, on constate que, d'une part, les opérations d'assemblage et de montage sont complexes et nécessitent beaucoup trop de temps. Par voie de conséquence, en aval, les interventions ultérieures, notamment de service après-vente, au cours desquelles on est amené à remplacer notamment une (des) pièce(s) que composent les modules, ou une (des) courroie(s) de transmission renvoyant un mouvement de rotation d'un module à un autre, s'avèrent fastidieuses et doublement gourmandes en temps (durées trop importantes des opérations impliquant le démontage d'au moins un module, de remise en ordre, puis de remontage du ou des modules, accès difficile aux organes de transmission du mouvement de rotation, etc.). D'autre part, le nombre de pièces nécessaires à l'assemblage d'un module et au montage de celui-ci sur son cadre-support, de même que l'encombrement, sont également trop importants. Cette chaîne de défauts renchérit assez considérablement le coût des barres de coupe, donc des machines dont elles constituent les pièces maîtresses.

Le but de la présente invention est de pallier cet inconvénient. En l'occurrence, la difficulté consiste essentiellement à satisfaire un double impératif dont les deux composantes, et des sous-composantes de ces dernières, sont difficilement conciliables, puisque certaines d'entre elles tendent plutôt à s'opposer, une solution apportée à un problème pouvant aller à l'encontre de la solution d'un autre problème. Il convient en effet d'allier à la rigidité du montage / démontage d'un module (première composante) un gain substantiel du temps de ce montage / démontage (deuxième composante). La rigidité procède de la conception du cadre, tandis qu'un renforcement obtenu par exemple par la seule augmentation de l'épaisseur de la tôle du cadre ou par apport de nervures, aurait bien sûr pour conséquence négative d'augmenter le poids de la barre de coupe, alors même qu'il faut au contraire chercher à le diminuer. Cette problématique a conduit l'inventeur à repenser toute la conception et la construction de la barre de coupe, c'est-à-dire la conformation du module, l'assemblage de celui-ci et son agencement sur le cadre, et le cadre lui-même, soit sa structure la mieux adaptée, tout en ne cédant pas aux conditions exigées d'indéformabilité, mais au contraire en les améliorant encore.

Ce but est atteint grâce au fait que le palier est conformé et agencé de sorte que le module peut être relié au cadre ou en être retiré, d'un même côté chaque fois, par la seule action d'organes d'assemblage / désassemblage, tandis que les revendications dépendantes portent sur des modes de réalisation avantageux de l'invention.

A titre d'exemple non limitatif, une forme d'exécution d'une barre de coupe incorporant les moyens de l'invention va être décrite ci-après, à l'appui des dessins annexés où
les figures 1 et 2 sont des vues schématisées, respectivement de face et de profil, d'une telle barre de coupe,
la figure 3 est une coupe du module monté sur son cadre selon la ligne III - III de la figure 1,
la figure 4 est une coupe selon la ligne IV - IV de la figure 2 montrant une liaison module - moteur,
la figure 5 est une perspective éclatée d'un tronçon de barre de coupe, et
la figure 6 est une coupe d'un palier de module selon la ligne III - III de la figure 1,
étant observé que dans ces figures, une seule et même référence est adoptée pour désigner des éléments qui, selon l'exemple décrit, peuvent se retrouver plusieurs fois à l'identique, et que le choix des échelles de représentation n'est pas uniforme.

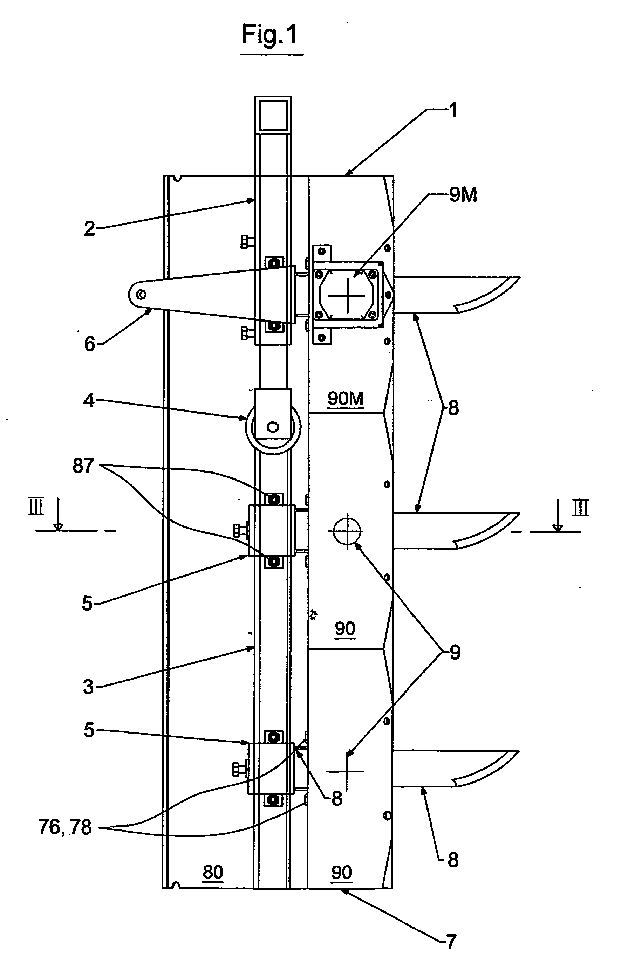

La barre de coupe 1 de la figure 1 est reliée à un support 2, 3 par l'intermédiaire de manchons 5 et d'un guide 6, ce support étant lui-même solidaire d'un cadre 7. Selon l'exemple, la partie supérieure 2 du support est fixe et la partie inférieure 3 mobile, cette dernière pouvant pivoter autour d'un axe horizontal (non référencé) grâce à un dispositif d'effacement 4 (lequel fait l'objet du brevet FR-2,718,326 (94.04484) du même inventeur). Cette barre de coupe est équipée en général de plusieurs organes de coupe 8 (trois selon l'exemple représenté à la figure 1). Chaque organe de coupe - selon l'exemple un couteau à double lame - est solidaire d'un module 9; 9 M fixé sur le cadre 7.

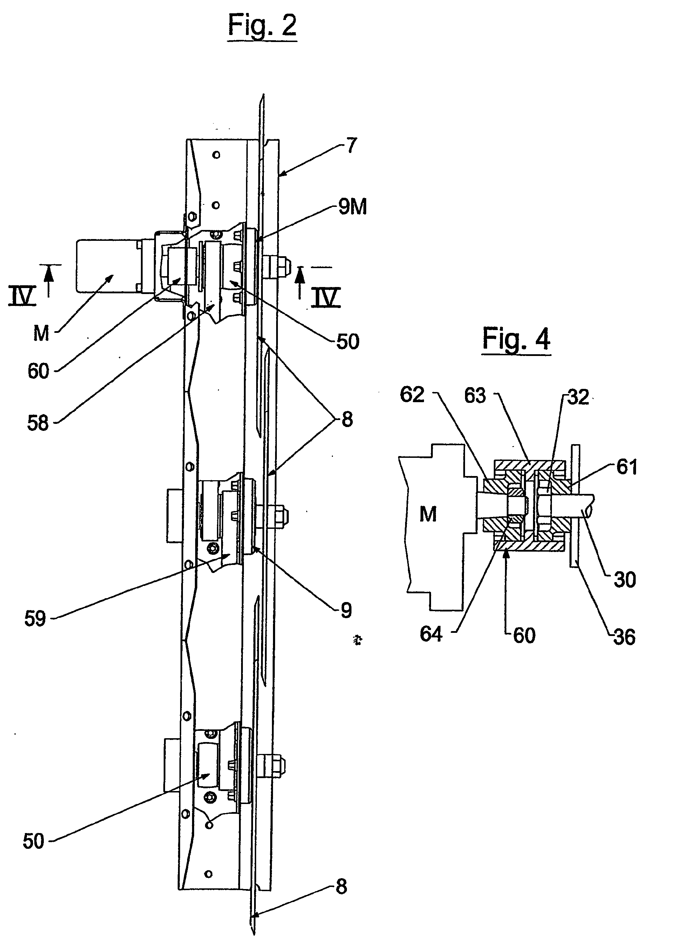

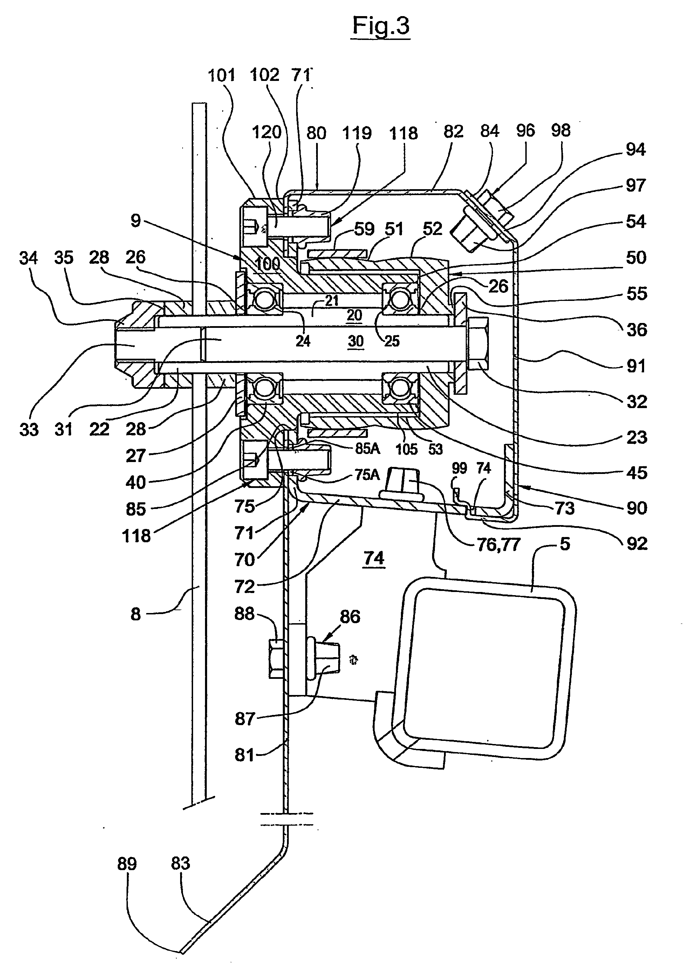

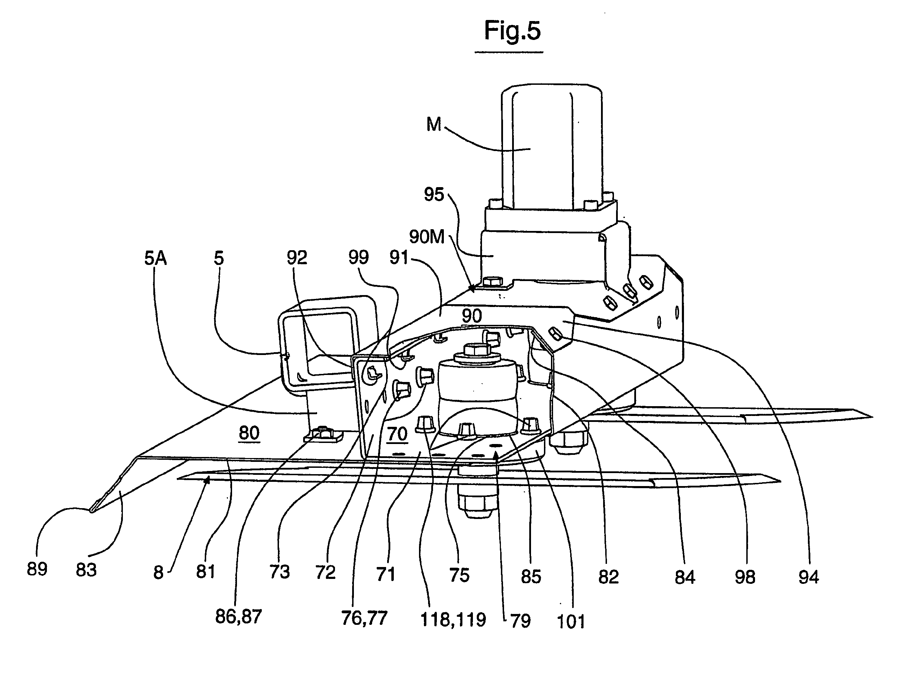

Un premier module 9 M (voir figure 2, où les organes de coupe 8 sont maintenant orientés verticalement, et figure 4) est accouplé à un moteur hydraulique M par l'intermédiaire d'un accouplement axial 60 agissant sur un arbre 20, 30 (sur la description duquel on reviendra infra) pour entraîner en rotation l'organe de coupe 8 correspondant (ou au moins l'un des éléments de cet organe de coupe si celui-ci en comporte plusieurs). Le mouvement de rotation est transmis à l'organe de coupe 8 du module adjacent 9 (deuxième module) qui le transmet à son tour à l'organe de coupe 8 du module suivant 9 (troisième module), chaque fois par l'intermédiaire d'une poulie 50 et d'une courroie de transmission 58, 59, la poulie comportant une jante à double bombage 51, 52 et un évidement borgne 53 (Figure 3).

Le module 9 M (un par barre de coupe) est donc identique à tout module 9, à la différence près qu'il comporte selon l'exemple un pignon 61 (dont la denture périphérique n'est pas spécifiquement référencée (cf. figure 4)). Ce dernier est relié à un pignon-moteur 62 par l'intermédiaire d'une bague d'accouplement 63 à denture intérieure, de préférence en matériau synthétique, le pignon 62 étant bloqué sur le moteur M par un écrou 64.

En imaginant la barre de coupe en position verticale, les organes de coupe 8 de deux modules voisins 9 ou du module 9 M et du module adjacent 9 sont décalés l'un par rapport à l'autre dans le plan horizontal, tout comme le sont, de manière analogue, les courroies de transmission 58, 59.

Le module 9 est représenté en coupe à la figure 3, et en perspective à la figure 5, chaque fois avec le cadre 7 sur lequel il est monté. Il comprend en particulier un palier 100 qui porte l'arbre 20, 30, lequel est guidé par un organe de guidage formé avantageusement de deux roulements 40, 45 insérés entre ce palier et cet arbre et la poulie 50. Il constitue un module du coupe à partir du moment où il est équipé d'un organe de coupe (mais on n'opérera pas de distinction par la suite, ,un module 9, 9 M pouvant s'entendre comme ensemble équipé ou non d'un organe de coupe 8. Il constitue ainsi un bloc pré-assemblé (selon des étapes explicitées plus loin) pouvant être relié au cadre 7 ou en être dégagé facilement et rapidement, d'un même côté (côté gauche sur la figure 3), le palier 100 étant conformé et agencé de sorte à prendre appui sur ce côté dudit cadre 7.

L'arbre se compose avantageusement de deux éléments, un élément extérieur creux 20 permettant le passage à un élément intérieur plein 30.

L'élément intérieur 30 se présente sous forme d'une vis à bout fileté 33 et à tête hexagonale 32, la tige portant la référence 31. L'élément extérieur 20 est un tube présentant une partie intermédiaire 21 se prolongeant, d'une part, après un épaulement 24, d'une partie 22 hors de laquelle se dégage tout ou partie du bout fileté 33 de l'élément 30, et, d'autre part, après un épaulement 25, d'une partie 23 orientée vers la tête 32 de l'élément 30. Les parties 22, 23 ont le même diamètre extérieur.

L'organe de coupe 8 comporte un trou central (non référencé) de diamètre d et est monté sur la partie tubulaire 22 (ajustement libre).

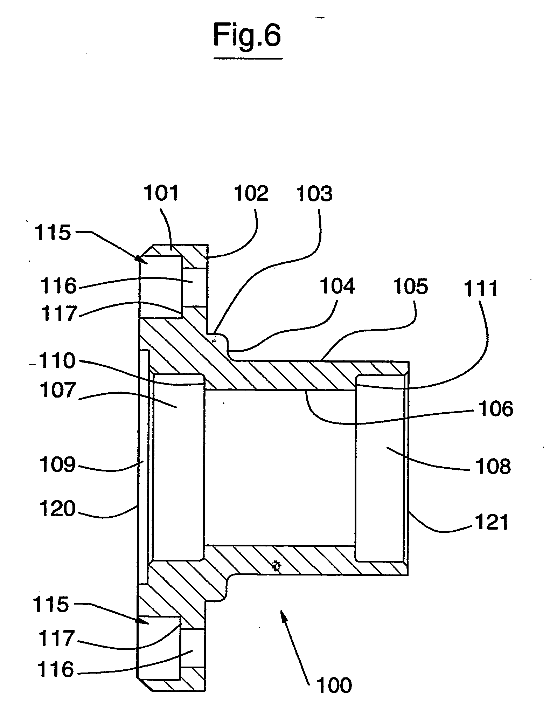

Le palier 100 (voir figure 6) se présente sous forme de pièce cylindrique, de préférence en alliage léger dur, dont les deux faces frontales parallèles portent les références 120, 121. Une embase 101 ayant une surface d'appui 102 se prolonge d'un épaulement 103 et d'un flanc 104 lui-même prolongé d'une portée 105. La longueur axiale de l'épaulement 103 correspond de préférence à l'épaisseur du cadre 7 (ce qui permet de prévenir un déjantage intempestif de la courroie 59 sur la poulie 50). Un alésage 106 débouche de part et d'autre sur des logements 107, 108 (épaulements 110, 111), le logement 107 s'ouvrant sur un lamage 109. La longueur axiale de l'alésage 106 est légèrement inférieure à la longueur axiale de la partie tubulaire 21. L'embase ou plaque d'appui 101 comporte quatre ouvertures 115 formées chacune d'un perçage 116 et d'un lamage 117. Selon une variante, notamment les sections de l'embase 101, de l'épaulement 103, de la portée 105 et de l'alésage 106 pourraient être polygonales plutôt que cylindriques.

A la lecture de la coupe de la figure 3 (et en se reportant le cas échéant à la figure 6, toutes les références du palier 100 n'ayant pas été reproduites à la figure 3), on comprend que le module peut être aisément pré-assemblé selon les étapes suivantes:
1.- Assemblage de l'ensemble - organe de guidage 40, 45 - élément tubulaire 20 de l'arbre - palier 100:
   - Mise en place du palier 100 sur l'élément tubulaire 20,
   - Agencement simultané des roulements 40, 45 sur les parties tubulaires 22,23, jusqu'à ce que les bagues intérieures desdits roulements arrivent en butée contre les épaulements 24, 25 respectivement, opération qui engendre en même temps le centrage, c'est-à-dire que l'élément tubulaire 21 se trouve exactement en regard de l'alésage 106 ;
2.- Mise en place de la poulie 50 dont l'évidement 53 vient coiffer la portée 105 du palier 100, la face de référence 54 dudit évidement venant en appui contre une rondelle 26 préalablement glissée sur la partie tubulaire 23, un léger jeu subsistant alors entre ladite face 54 de la poulie et la face 121 du palier;
3.- Introduction de l'arbre plein 30 dans l'arbre creux 20, une rondelle 36 étant disposée entre la tête 32 de la vis 30 et un collet annulaire 55, l'extrémité de la partie tubulaire 23 se trouvant légèrement en retrait de la face extérieure dudit collet;
4.- Engagement d'une rondelle 26 et d'une rondelle 27 sur la partie tubulaire 22, la rondelle 26 venant en appui contre la bague intérieure (non référencée) du roulement 40, et le plan extérieur (non référencé) de la rondelle 27 se dégageant du plan de la face 120 du palier 100;
5.- Mise en place de l'organe de coupe 8 et des bagues-entretoises 28;
6.- Blocage au moyen de l'écrou 34 dont la face 35 vient en butée contre l'entretoise extérieure 28, le module constituant alors un ensemble monolithique. Les entretoises 28 permettent de placer l'organe de coupe 8 dans différentes positions, donc une grande flexibilité de montage: montage de l'organe de coupe en premier, de sorte à venir en appui contre la rondelle 27, puis mise en place des entretoises 28 et de l'écrou 34, ou montage tel que représenté à la figure 3 (voir supra, étape 4 du montage), ou encore montage des deux entretoises suivi de la mise en place de l'organe de coupe 8 et de l'écrou 34.

Le cadre 7 comprend un châssis 70 auquel est associé un déflecteur 80 remplissant une fonction de sécurité (voir les figures 3 et 5).

Le châssis 70 est constitué d'un profilé, de préférence en alliage léger dur, le profil présentant approximativement une forme en L dont les ailes sont référencées 71 et 72, l'aile 72 se prolongeant d'un rabat 73. Des ouvertures 75 dont la section correspond à celle dé l'épaulement 103 du palier 100 permettent le passage des modules 9, 9 M. Autour de chaque ouverture 75 sont prévus quatre perçages 75 A en vue de la fixation du module 9, 9 M au moyen d'organes de fixation 118 (figure 3).

Le déflecteur 80 est constitué d'un profilé, de préférence en acier inoxydable, le profil présentant approximativement une forme en L dont les ailes sont référencées 81 et 82. L'aile 82 se prolonge d'un rabat 83 l'angle d'inclinaison étant d'environ 45 °, et l'aile 81 se prolonge d'un rabat de sécurité 83 s'étendant à une distance au-delà des organes de coupe 8, l'arête extérieure 89 de ce rabat 83 dépassant le plan (non référencé) que forme le ou les organes de coupe situé(s) le plus à l'extérieur. Des ouvertures 85 dont la section correspond à celle de l'épaulement 103 du palier 100 et qui sont placées en regard des ouvertures 75 du châssis, permettent le passage des modules 9, 9 M. Comme pour le châssis, quatre perçages 85 A sont prévus autour de chaque ouverture 85 en vue de la fixation du module 9, 9 M au moyen des organes de fixation 118 (figure 3).

Le montage d'une barre de coupe est effectué dans un minimum de temps (en comparaison avec les barres de coupe connues les plus sophistiquées, le temps de montage est réduit d'environ 40 %):

En premier lieu, châssis 70 et déflecteur 80 sont placés ensemble de sorte à former un canal 79 dans lequel prendront place les modules 9, 9 M (figure 5), et les ouvertures 75, 75 A et 85, 85 A respectivement du châssis et du déflecteur se trouvant en regard les uns des autres. En deuxième lieu, le module 9 M et le ou les modules 9 pré-assemblés sont successivement engagés dans lesdites ouvertures 75, 85 (de bas en haut à la figure 5 ou de gauche vers la droite à la figure 3), la face 102 de l'embase 101 du palier 100 venant s'appuyer contre la face correspondante de l'aile 81, l'épaulement 103 assurant en même temps le centrage du module, et le diamètre extérieur de la poulie 50 étant légèrement inférieur aux diamètres uniformes des ouvertures 75, 85. En troisième lieu, les vis 120 sont engagés dans les trous 115 du palier (figure 6) et vissées dans les écrous 119 sertis dans l'aile 71 du châssis. Ainsi, le montage du ou des modules 9 M, 9 emporte simultanément solidarisation du châssis 70 et du déflecteur 80 pour former le cadre 7 et un caisson rigide et indéformable assurant une tenue parfaite et fiable du module 9 sur ledit cadre.

Ces opérations terminées, il ne suffira plus qu'à monter, selon l'exemple, les courroies de transmission 58, 59, puis à fermer le canal 79 au moyen de capots 90 et d'un capot 90 M, ce dernier portant le moteur M par l'intermédiaire d'un support-cache 95, les capots étant disposés jointives (figures 1, 3 et 5).

Un capot 90 est formé d'une plaque 91 en tôle ou autre matériau dont les bords 92 et 94 sont rabattus de sorte à pouvoir épouser respectivement l'aile 72 du châssis 70 et l'aile 84 du déflecteur 80. Chaque capot est monté avec une aptitude de pivotement autour du châssis et solidarisé à ce dernier, c'est-à-dire, ici, au déflecteur 80, par des moyens de fixation 96, les rabats 84, 94 comportant à cette fin des perçages (non référencés). Les moyens de fixation sont composés de vis 98 et d'écrous 97 sertis dans le rabat 84 du déflecteur 80. L'aptitude au pivotement est avantageusement, assurée par des pattes 99 (au nombre de trois) découpées dans le bord 92 et dont la conformation ressort bien des figures 3 et 5, lesdites pattes venant s'introduire dans des saignées ou fentes 74 (voir figure 3) pratiquées dans l'aile 72 du châssis. Le capot 90 M est similaire à un capot 90, à la différence qu'il comporte trois perçages supplémentaires (non référencés, voir figures 1 et 5), permettant la fixation sur lui du support-cache 95 au moyens d'organes de fixation (systèmes vis-écrous sertis non référencés).

Après montage de la barre de coupe, le cadre 7, composé, selon l'exécution décrite, du châssis 70 et du déflecteur 80, sera rendu solidaire des manchons 5 par l'intermédiaire de plaques-supports 5 A. Ces dernières sont fixées, d'une part, au châssis par des organes de fixation 76, en l'occurrence des systèmes vis 78 (voir aussi fig. 1) - écrous 77 sertis dans l'aile 72 et, d'autre part, au déflecteur par des organes de fixation 86 (systèmes vis 88 - écrous 87 sertis dans l'aile 81).

On conçoit aisément que la barre de coupe décrite allie à la perfection: temps de montage minimum, nombre et variété de pièces minima, encombrement et poids minima et indéformabilité de l'ensemble. Ces avantages seront également appréciés ultérieurement, lors d'interventions éventuelles ou travaux préventifs. Le démontage d'un module 9 est extrêmement simple et rapide. Il suffira en effet, d'une part, d'accéder au canal aux fins d'enlever la ou les courroies, donc de soulever le capot 90 correspondant en le basculant autour des moyens de pivotement après dévissage de deux vis, et, d'autre part, dévisser les quatre vis de retenue du palier, donc du module entier au cadre. Le module 9 est dégagé du canal 79 en le tirant par l'embase 101 du palier 100 (s'il s'agit d'un module 9 M, le pignon 61 se libérera de la bague d'accouplement 63, ou bien, cela est indifférent, emmènera celle-ci). On comprend que, pour le seul enlèvement d'une courroie, il n'y aura lieu d'entreprendre que la première phase des opérations précitées. Un organe de coupe 8 peut être remplacé tout aussi facilement et rapidement, le seul dévissage de l'écrou-chapeau 34 correspondant permettant de le libérer; le cas échéant, c'est-à-dire si le dévissage impose le blocage de la tête 32 de l'arbre 30, l'opérateur devra soulever le capot comme décrit plus haut.

On observe que cette remarquable alliance technique est couronnée d'une esthétique des plus heureuses.

## Revendications

1. Barre de coupe équipant une machine utilisable notamment en agriculture, arboriculture et viticulture, reliée à un support (2, 3) solidaire d'un cadre (7) et pourvue d'au moins un module (9, 9M) fixé audit cadre (7), ledit module comportant un arbre (20) porté par au moins un palier (100), au moins un organe de coupe (8) fixé audit arbre (20) et pouvant être entraîné en rotation, au moins une poulie (50) et pouvant être relié à un moteur (M), **caractérisée en ce que** ledit module (9, 9M) est constitué par un ensemble pré-assemblé et est engagé dans une ouverture (75) dudit cadre (7) avec une surface d'appui (102) d'une plaque d'appui (101) dudit palier (100) contre le côté du cadre (7) faisant face à l'organe de coupe (8) et **en ce que** ledit module (9, 9M) est fixé audit cadre (7) par la fixation d'organes d'assemblage / désassemblage (118) engagés dans des trous (115) du palier (100) de sorte que ledit module (9, 9M) est relié au cadre (7) ou en est dégagé du côté du cadre (7) sur lequel vient s'appuyer l'embase (101) du palier (100) par la seule action des organes d'assemblage / désassemblage (118).

2. Barre de coupe selon la revendication 1, **caractérisée en ce que** le palier (100) comporte la plaque d'appui (101) dont la surface d'appui (102) vient en appui sur ledit cadre (7) et se prolonge d'un épaulement (103), et **en ce que** la section de l'ouverture (75) dudit cadre (7) correspond à celle dudit épaulement (103) de sorte que ledit épaulement (103) assure le centrage du module (9, 9M).

3. Barre de coupe selon la revendication 2, **caractérisée en ce que** la poulie (50) est agencée sur une portée (105) du palier (100) et que les dimensions radiales maxima de l'épaulement (103) correspondent au diamètre extérieur de la poulie (50), de sorte à permettre le passage à cette dernière à travers l'ouverture (75, 85), l'épaulement (103), l'ouverture (75, 85) et la portée (105) étant de préférence cylindriques.

4. Barre de coupe selon la revendication 2 ou 3, **caractérisée en ce que** les organes d'assemblage / désassemblage (118) comprennent des écrous (119) sertis dans le cadre, du côté opposé à celui par lequel le module (9) peut y être relié ou en être dégagé, l'embase (101) étant pourvue de perçages (115) permettant le passage de vis (120).

5. Barre de coupe selon la revendication 2, 3 ou 4, **caractérisée en ce que** la longueur axiale de l'épaulement (103) correspond à l'épaisseur du cadre (7).

6. Barre de coupe selon l'une des revendications 1 à 5, **caractérisée en ce que** le cadre (7) est formé d'un châssis (70) auquel est associé un déflecteur (80), ces éléments (70, 80) étant solidarisés (ou désolidarisés) par le seul effet du montage (ou du démontage) du module (9; 9M) sur le (ou du) cadre.

7. Barre de coupe selon l'une des revendications 1 à 6, **caractérisée en ce que** l'arbre est guidé par un organe de guidage formé de préférence de deux roulements (40, 45) insérés entre ledit arbre et ledit palier et **en ce que** l'arbre comprend un élément extérieur tubulaire (20) permettant le passage à un élément intérieur (30) à l'une des extrémités duquel est fixé l'organe de coupe (8), l'autre extrémité de cet élément intérieur comportant une tête (32) prenant appui, directement ou indirectement par l'intermédiaire d'au moins une rondelle (36), soit sur la poulie (50), soit sur un élément (61) d'un accouplement (60) à un moteur (M).

8. Barre de coupe selon la revendication 7, **caractérisée en ce que** la partie tubulaire (20) de l'arbre (30) est partiellement abritée par le palier (100) et qu'elle comporte une partie (21) se prolongeant de part et d'autre de parties (22, 23) de même diamètre et dont l'une se dégage hors du palier pour recevoir l'organe de coupe (8).

9. Barre de coupe selon la revendication 7 ou 8, **caractérisée en ce que** l'élément intérieur (30) de l'arbre (20, 30) est une vis présentant une partie filetée (33) et une tête (32).

10. Barre de coupe selon la revendication 8 ou 9, **caractérisée en ce que** l'organe de coupe comporte un trou central de diamètre correspondant à celui de la partie tubulaire (22).

11. Barre de coupe selon l'une des revendications 1 à 6, **caractérisée en ce que** le module (9; 9 M) est pré-assemblé selon les étapes principales suivantes:
- formation d'un ensemble - organe de guidage - élément extérieur tubulaire de l'arbre - palier,
- agencement de la poulie sur une portée du palier,
- introduction d'un élément intérieur de l'arbre dans la partie tubulaire,
- mise en place de l'organe de coupe sur la partie tubulaire et d'entretoises de sorte à assurer le décalage des plans de coupe d'organes de coupe adjacents,
- blocage axial de l'ensemble ainsi constitué.

12. Barre de coupe selon l'une des revendications 1 à 11, **caractérisée en ce que** chaque module (9; 9M) est abrité par un capot (90) relié au cadre (7), d'une part, par au moins un moyen de pivotement et, d'autre part, par des organes de fixation assurant la fermeture du capot à l'état rabattu sur ledit cadre.

13. Barre de coupe selon la revendication 12, **caractérisée en ce que** l'aptitude au pivotement du capot est assurée par au moins un élément tel que charnière.

14. Barre de coupe selon la revendication 12, **caractérisée en ce que** le capot présente au moins une patte engagée dans une saignée pratiquée dans le cadre, la patte et la saignée étant conformées de sorte à pouvoir coopérer pour assurer l'aptitude au pivotement.

## Claims

1. Cutting bar fitted on a machine that can be used in particular in agriculture, arboriculture and viticulture, connected to a support (2, 3) attached to a frame (7) and provided with at least one module (9; 9M) fixed to the said frame (7), the said module comprising a shaft (20) carried by at least one bearing (100), at least one cutting element (8) which is fixed to the said shaft (20) and can be driven in rotation, and at least one pulley (50), and that can be connected to a motor (M), **characterised in that** the said module (9; 9M) consists of a pre-assembled unit and is engaged in an opening (75) of the said frame (7) with a contact surface (102) of a contact plate (101) of the said bearing (100) against the side of the frame (7) that faces the cutting element (8), and **in that** the said module (9; 9M) is fixed to the said frame (7) by the fitting of assembly/dismantling elements (118) that engage in holes (115) of the bearing (100) in such manner that the said module (9; 9M) is connected to the frame (7) or detached therefrom on the side of the frame (7) on which the base (101) of the bearing rests, by the sole action of the said assembly/dismantling elements (118).

2. Cutting bar according to Claim 1, **characterised in that** the bearing (100) comprises the contact plate (101) whose contact surface (102) rests against the said frame (7) and is extended by a shoulder (103), and **in that** the section of the opening (75) of the said frame (7) corresponds to that of the said shoulder (103) so that the said shoulder (103) ensures that the module (9; 9M) is centred.

3. Cutting bar according to Claim 2, **characterised in that** the pulley (50) is arranged on a bearing surface (105) of the bearing (100) and the maximum radial dimensions of the shoulder (103) correspond to the outer diameter of the pulley (50), so as to allow the latter to pass through the opening (75, 85), the shoulder (103), the opening (75, 85) and the bearing surface (105) preferably being cylindrical.

4. Cutting bar according to Claim 2 or 3, **characterised in that** the assembly/dismantling elements (118) comprise nuts (119) set into the frame, on the side opposite that on which the module (9) can be attached to or removed from it, the base (101) being provided with holes (115) to enable the passage of screws (120).

5. Cutting bar according to Claim 2, 3 or 4, **characterised in that** the axial length of the shoulder (103) corresponds to the thickness of the frame (7).

6. Cutting bar according to any of Claims 1 to 5, **characterised in that** the frame (7) is formed of a chassis (70) associated with a deflector (80), these elements (70, 80) being attached (or detached) by the sole effect of mounting (or removing) the module (9; 9M) onto (or from) the frame.

7. Cutting bar according to any of Claims 1 to 6, **characterised in that** the shaft is guided by a guiding element preferably formed by two roller bearings (40, 45) inserted between the said shaft and the said bearing, and **in that** the shaft comprises an external tubular element (20) which allows the passage of an internal element (30) to one end of which is fixed the cutting element (8), the other end of this internal element comprising a head (32) which rests, directly or indirectly via at least one washer (36), either on the pulley (50) or on an element (61) of a coupling (60) to a motor (M).

8. Cutting bar according to Claim 7, **characterised in that** the tubular portion (20) of the shaft (30) is partially covered by the bearing (100) and comprises a part (21) that extends on either side of portions (22, 23) having the same diameter, one of which projects outside the bearing to receive the cutting element (8).

9. Cutting bar according to Claim 7 or 8, **characterised in that** the internal element (30) of the shaft (20, 30) is a screw having a threaded portion (33) and a head (32).

10. Cutting bar according to Claim 8 or 9, **characterised in that** the cutting element has a central hole of diameter corresponding to that of the tubular portion (22).

11. Cutting bar according to any of Claims 1 to 6, **characterised in that** the module (9; 9M) is pre-assembled according to the following main steps:
- formation of an assembly consisting of the guiding element, the external tubular element of the shaft and the bearing,
- fitting of the pulley onto a bearing surface of the bearing,
- introduction of an internal element of the shaft into the tubular portion,
- positioning of the cutting element on the tubular portion, with crosspieces to ensure an offset between the cutting planes of adjacent cutting elements,
- axial locking of the assembly so constituted.

12. Cutting bar according to any of Claims 1 to 11, **characterised in that** each module (9; 9M) is covered by a cap (90) connected to the frame (7), on the one hand by at least one pivoting means and on the other hand by fixing elements that ensure the closure of the cap when it is lowered onto the said frame.

13. Cutting bar according to Claim 12, **characterised in that** the cap's ability to pivot is ensured by at least one element such as a hinge.

14. Cutting bar according to Claim 12, **characterised in that** the cap has at least one tab which engages in a recess formed in the frame, the tab and recess being shaped so as to be able to co-operate in order to ensure the ability to pivot.

## Patentansprüche

1. Schneidbalken, mit dem eine Maschine ausgerüstet wird, die insbesondere in der Landwirtschaft, in der Forstwirtschaft und im Weinbau einsetzbar ist, wobei der Balken mit einer fest mit einem Gestell (7) verbundenen Stütze (2, 3) verbunden und mit mindestens einem Modul (9, 9M) versehen ist, das an dem Gestell (7) befestigt ist, wobei das Modul eine Welle (20), die von mindestens einem Lager (100) getragen wird, mindestens ein Schneidorgan (8), das an der Welle (20) befestigt ist und in Drehung versetzt werden kann, sowie mindestens eine Antriebsscheibe (50) umfaßt und mit einem Motor (M) verbunden sein kann, **dadurch gekennzeichnet, daß** das Modul (9, 9M) durch eine vorher zusammengebaute Baueinheit gebildet ist und in eine Öffnung (75) des Gestells (7) mit einer Auflagefläche (102) einer Auflageplatte (101) des Lagers (100) zur Seite des Gestells (7) hin, die dem Schneidorgan (8) gegenüberliegt, eingreift und daß das Modul (9, 9M) am Gestell (7) mittels Befestigung von Organen zum Zusammenbauen/Auseinandernehmen (118) befestigt ist, die in Löcher (115) des Lagers (100) eingreifen, dergestalt, daß das Modul (9, 9M) mit dem Gestell (7) verbunden oder auf der Seite des Gestells (7), an der die Fußplatte (101) des Lagers (100) anliegt, durch bloße Betätigung der Organe zum Zusammenbauen/ Auseinandernehmen (118) gelöst wird.

2. Schneidbalken nach Anspruch 1, **dadurch gekennzeichnet, daß** das Lager (100) die Auflageplatte (101) umfaßt, deren Auflagefläche (102) auf dem Gestell (7) aufliegt und sich in einem Ansatz (103) fortsetzt, und daß der Querschnitt der Öffnung (75) des Gestells (7) dem des Ansatzes (103) entspricht, dergestalt, daß der Ansatz (103) die Zentrierung des Moduls (9, 9M) sicherstellt.

3. Schneidbalken nach Anspruch 2, **dadurch gekennzeichnet, daß** die Antriebsscheibe (50) auf einer Lagerfläche (105) des Lagers (100) angeordnet ist und die maximalen radialen Abmessungen des Ansatzes (103) dem Außendurchmesser der Antriebsscheibe (50) entsprechen, so daß diese letztere durch die Öffnung (75, 85) hindurchgeführt werden kann, wobei der Ansatz (103), die Öffnung (75, 85) und die Lagerfläche (105) vorzugsweise zylindrisch ausgebildet sind.

4. Schneidbalken nach Anspruch 2 oder 3, **dadurch gekennzeichnet, daß** die Organe zum Zusammensetzen/Auseinandernehmen (118) Muttern (119) umfassen, die in das Gestell auf der Seite eingesetzt werden, die der Seite gegenüberliegt, über welche das Modul (9) mit diesem verbunden oder von diesem gelöst werden kann, wobei die Fußplatte (101) mit Bohrungen (115) versehen ist, die ein Hindurchführen von Schrauben (120) ermöglichen.

5. Schneidbalken nach Anspruch 2, 3 oder 4, **dadurch gekennzeichnet, daß** die axiale Länge des Ansatzes (103) der Dicke des Gestells (7) entspricht.

6. Schneidbalken nach einem der Ansprüche 1 bis 5, **dadurch gekennzeichnet, daß** das Gestell (7) aus einem Rahmen (70) gebildet ist, dem eine Ablenkplatte (80) zugeordnet ist, wobei diese Baueinheiten (70, 80) lediglich durch die Wirkung der Montage (oder Demontage) des Moduls (9; 9M) am (oder vom) Gestell aneinander befestigt (oder voneinander gelöst) werden.

7. Schneidbalken nach einem der Ansprüche 1 bis 6, **dadurch gekennzeichnet, daß** die Welle von einem Führungsorgan geführt wird, das vorzugsweise aus zwei Wälzlagern (40, 45) gebildet ist, die zwischen der Welle und dem Lager eingesetzt sind und daß die Welle ein rohrförmiges äußeres Element (20) umfaßt, welches einen Durchgang zu einem inneren Element (30) gestattet, an dessen einem Ende das Schneidorgan (8) befestigt ist, wobei das andere Ende dieses inneren Elementes einen Kopf (32) umfaßt, der direkt oder indirekt, mittels mindestens einer Unterlegscheibe (36), auf der Antriebsscheibe (50) oder auf einem Element (61) einer Kopplung (60) mit einem Motor (M) aufliegt.

8. Schneidbalken nach Anspruch 7, **dadurch gekennzeichnet, daß** das rohrförmige Element (20) der Welle (30) teilweise durch das Lager (100) aufgenommen ist und daß es ein Teil (21) umfaßt, das sich beidseits in Teile (22, 23) mit gleichem Durchmesser fortsetzt, deren eines außerhalb des Lagers liegt, um das Schneidorgan (8) aufzunehmen.

9. Schneidbalken nach Anspruch 7 oder 8, **dadurch gekennzeichnet, daß** das innere Element (30) der Welle (20, 30) eine Schraube ist, die einen Gewindeabschnitt (33) und einen Kopf (32) aufweist.

10. Schneidbalken nach Anspruch 8 oder 9, **dadurch gekennzeichnet, daß** das Schneidorgan ein Mittelloch mit einem Durchmesser umfaßt, der demjenigen des rohrförmigen Teils (22) entspricht.

11. Schneidbalken nach einem der Ansprüche 1 bis 6, **dadurch gekennzeichnet, daß** das Modul (9; 9M) gemäß folgenden Hauptschritten vorab zusammengebaut wird:
- Bildung einer Gesamtheit aus Führungsorgan-äußerem rohrförmigen Wellenelement -Lager,
- Anordnung der Antriebsscheibe auf einer Lagerfläche des Lagers,
- Einbringen eines inneren Elementes der Welle in das rohrförmige Teil,
- Anbringen des Schneidorgans auf dem rohrförmigen Teil und von Abstandshülsen, dergestalt, daß ein Versetzen der Schneidebenen von benachbarten Schneidorganen sichergestellt ist,
- axiales Verriegeln der so gebildeten Anordnung.

12. Schneidbalken nach einem der Ansprüche 1 bis 11, **dadurch gekennzeichnet, daß** jedes Modul (9; 9M) durch eine Abdeckhaube (90) aufgenommen ist, die mit dem Gestell (7) einerseits über mindestens ein Schwenkmittel und andererseits über Befestigungsorgane verbunden ist, die das Verschließen der Haube im auf das Gestell heruntergeklappten Zustand sicherstellen.

13. Schneidbalken nach Anspruch 12, **dadurch gekennzeichnet, daß** die Verschwenkbarkeit der Abdeckhaube mittels mindestens eines Elementes, wie eines Scharniers, sichergestellt ist.

14. Schneidbalken nach Anspruch 12, **dadurch gekennzeichnet, daß** die Schutzhaube mindestens eine Klinke aufweist, die in einen Einschnitt eingreift, welcher im Gestell ausgebildet ist, wobei die Klinke und der Einschnitt so angepaßt sind, daß sie zusammenwirken können, um die Verschwenkbarkeit sicherzustellen.
